# EUROPÄISCHE PATENTSCHRIFT

(11) **EP 3 250 469 B1**
(45) Veröffentlichungstag und Bekanntmachung des Hinweises auf die Patenterteilung: **11.03.2020**
(21) Anmeldenummer: 16702525.3
(22) Anmeldetag: 29.01.2016
(51) Int. Cl.: B65D 75/32, B65D 75/36, B65D 85/60, B65B 11/50, B65B 23/00, B65B 25/00, B65B 63/08

(54) **VERFAHREN ZUM HERSTELLEN EINER VERPACKUNG**
METHOD FOR MANUFACTURING PACKAGING
PROCÉDÉ DE PRODUCTION D'UN EMBALLAGE

(30) Priorität: 30.01.2015 DE 102015101417
(43) Veröffentlichungstag der Anmeldung: 06.12.2017
(73) Patentinhaber: Chocal Aluminiumverpackungen GmbH, 73525 Schwaebisch Gmuend (DE)
(72) Erfinder: SPECK, Thomas, 73571 Göggingen (DE); SDAHL, Michael, 73614 Schorndorf (DE); SCHERR, Joachim, 71549 Auenwald (DE); BANTLEON, Konrad, 89547 Gerstetten (DE)
(74) Vertreter: Grünecker Patent- und Rechtsanwälte PartG mbB
(86) Internationale Anmeldenummer: PCT/EP2016/051971
(87) Internationale Veröffentlichungsnummer: WO 2016/120466

(56) Entgegenhaltungen:
- EP-A1- 2 765 081
- EP-A1- 2 765 081
- EP-A1- 2 765 081
- WO-A1-2008/014767
- WO-A1-2008/014767
- WO-A1-2008/014767
- CA-A1- 2 809 033
- CA-A1- 2 809 033
- CA-A1- 2 809 033
- DE-A1- 10 331 205
- DE-A1- 10 331 205
- DE-A1- 10 331 205
- DE-A1-102006 049 146
- DE-A1-102006 049 146
- DE-A1-102008 052 598
- DE-A1-102008 052 598
- DE-A1-102011 002 754
- DE-A1-102011 002 754
- DE-A1-102011 002 754
- DE-B- 1 211 913
- DE-B- 1 211 913
- DE-U- 7 032 766
- DE-U- 7 032 766
- DE-U- 7 032 766
- US-A1- 2002 170 269
- US-A1- 2002 170 269
- US-A1- 2002 170 269
- US-A1- 2012 204 412
- US-A1- 2012 204 412
- US-A1- 2012 204 412
- US-B1- 6 288 375
- US-B1- 6 288 375
- US-B2- 8 341 992
- US-B2- 8 341 992

## Beschreibung

Die Erfindung betrifft ein Verfahren zum Herstellen einer Verpackung für ein Lebensmittelprodukt, sowie eine Verpackung für ein Lebensmittelprodukt, insbesondere eine Schokohohlfigur, mit den Merkmalen der Oberbegriffe der unabhängigen Ansprüche.

Von dem Verpacken von Schokohohlfiguren ist es bekannt, diese in einer Metallfolie derart einzupacken, dass Teilschalen einer Metallfolie beispielsweise durch Umformen, wie Tiefziehen, oder Einlegen und Falten in eine Form, vorgeformt werden, wobei ein umfangsseitig abstehender Rand verbleibt. Zwischen die beiden Teilschalen wird eine Schokohohlfigur eingebracht, und die Teilschalen anschließend mit ihren Rändern derart aufeinandergelegt, dass sie das Produkt einhausen und die Auflagefläche der Ränder eine Koppelebene bilden. Anschließend werden die Ränder durch Bördeln bzw. Falzen an ihren Endabschnitten miteinander verbunden, so dass sich eine umlaufend formschlüssig geschlossene Verpackung ergibt. Das Produkt hat dann einen sogenannten umlaufenden Saturnring, welcher sich aus dem mindestens einmal umgebördelten Bereich der aneinanderliegenden Ränder ergibt. Üblicherweise sind diese aneinanderliegenden Ränder einmal mit ihren Endbereichen um 180° gefalzt.

In der DE 10 2011 002 754.8 wird vorgeschlagen, zum Erreichen einer möglichst dichten Verpackung, die vorgeformten Metallfolien vollflächig mit einer Siegelschicht aus thermoplastischem Kunststoff, beispielsweise Polypropylen oder Polyethylen, zu versehen. Damit lassen sich die einzelnen Metallfolien leicht herstellen, die in der Regel aus einem zunächst vollflächig ebenen Metallfolienmaterial herstellen lassen, das mit der Beschichtung versehen ist und nachfolgend zu der Form der Teilschalen durch leichtes Tiefziehen vorgeformt wird. Wenn die Hohlfigur zwischen zwei Teilschalen eingelegt ist und deren Ränder aufeinanderliegen, befinden sich die Kunststoffschichten zwischen den aufeinanderliegenden Rändern und werden beispielsweise durch Erwärmen an bestimmten Abschnitten der Ränder miteinander verbunden, so dass sich eine stoffschlüssige Verbindung ergibt, die nachfolgend gefalzt werden kann.

In der EP 2 765 081 A1 ist ein Verfahren der eingangs genannten Gattung offenbart, bei welchem zunächst die Teilschalen durch Umformen, insbesondere Tiefziehen, und Ausbilden des seitlich abstehenden Randes gebildet werden. Nach dem Einlegen eines Produkts wird zunächst lokal an dem Rand eine Siegelung derart vorgenommen, dass sich eine umfangsseitig um das Produkt umlaufende schmale Siegelnaht an dem radial vom Produkt aus gesehen äußeren Bereich des Randes ergibt. Hierfür wird ein Siegelbalken, welcher beheizt ist, von oben auf die flach aufeinanderliegenden Ränder gedrückt, allerdings der Rand nur im Querschnitt des Randes gesehen in einem sehr schmalen begrenzten Bereich gesiegelt.

Nach dem Vollenden des Siegelns wird der Rand derart beschnitten, dass der gesiegelte Bereich praktisch ganz außen an dem Rand zu liegen kommt. Der Schneidvorgang ist so ausgestaltet, dass beim Schneiden in einem ersten Schritt ein Falzen erfolgt, bei welchem der äußere Rand um etwa 90° gegenüber der sonst horizontalen Koppelebene verformt wird. In einem nachfolgenden zweiten Schritt wird jener 90° gewinkelte Bereich dann in Richtung auf das Produkt parallel zurück auf den restlichen Rand gefalzt, so dass sich insgesamt ein Bördelrand ergibt, bei welchem der gesiegelte Bereich in dem, vom Produkt aus gesehen, distalen Bereich des Randes angeordnet ist, während die Falzlinie und der an die gewölbte Hülle angrenzende proximale Bereich nicht gesiegelt ist. Dabei wird davon ausgegangen, dass sich mit der in dem distalen Bereich des Randes befindlichen Siegelung eine ästhetisch besser aussehende Verbindung schaffen ließe. Der Bördelfalz ließe sich dann auch gut an das Produkt anschmiegen. Gleichwohl ist dieses Verfahren relativ aufwendig und vertraut auf die im distalen Bereich vorgesehene Siegelung zum Erreichen einer ausreichenden Dichtheit.

Weitere Verfahren zur Herstellung von Verpackung von Lebensmittel sind aus der EP 2 765 081 A1 und der CA 2 809 033 A1 bekannt. Ein generelles Bördeln bzw. Bördeln in Verbindung mit einer Verklebung wird im Bereich der Blechbearbeitung in der DE 103 31 205 A1, WO 2008/014 767 A1 und der US 2012/0 204 412 A1 beschrieben.

Der Erfindung liegt die Aufgabe zugrunde, ein Verfahren mit einer zugehörigen Verpackung der eingangs genannten Gattung dahingehend zu verbessern, dass möglichst einfach und praktisch durchzuführen ist, ein wirksames Verschließen der Teilschalen an den Rändern ermöglicht und eine Verpackung herzustellen ist, die nach außen ästhetisch und gut aussieht.

Diese Aufgabe wird erfindungsgemäß gelöst mit einem Verfahren mit den Merkmalen von Anspruch 1. Zudem ist eine Verpackung mit den Merkmalen von Anspruch 15 vorgesehen. Weitere vorteilhafte Ausgestaltungen sind in den Unteransprüchen definiert.

Der Erfindung liegt die Idee zugrunde, dass eine gute Verbindung der beiden Ränder erfolgen kann, wenn der Verformungsvorgang des Falzens zusammen mit dem Siegeln bzw. das Siegeln an einem bereits durch Falzen vorgeformten Rand erfolgt. Wenn das Falzen und das Siegeln zusammen erfolgen, kann sich die Siegelverbindung der dabei mit ausgebildeten Falzverbindung besonders gut anpassen und es entsteht eine gewünschte Festigkeit der Verbindung als auch eine ausreichende Dichtheit. Es ist günstig, wenn sich das Siegelmaterial dem Verformungsvorgang bzw. dem vorgeformten Falz beim Siegeln anpassen kann. Die daraus kombiniert entstehende Siegel-Falzverbindung ist in der Praxis äußerst zuverlässig und vom verfahrenstechnischen Aufwand her mit nur wenigen Verfahrensabläufen herzustellen. Auch in ästhetischer Sicht ergibt sich ein sehr gutes Aussehen der Verpackung, weil das Siegeln die Falzform praktisch mit berücksichtigt.

Als Variante der Erfindung können die Ränder in einem ersten Schritt vorgefalzt werden und in einem zweiten Schritt fertig gefalzt und versiegelt werden. Das Vorfalzen der Ränder erfolgt, beispielsweise um mindestens 90° oder in anderen Winkelstellungen, so dass eine gewisse Vorformgebung gewährleistet ist, bevor dann im zweiten Schritt das Versiegeln zusammen mit dem Fertigfalzen verläuft. Es ist auch möglich, dass ein distaler Bereich der Ränder bereits um eine Falzlinie im ersten Schritt vollständig auf den nahe der Höhlung vorgesehenen proximalen Bereich der Ränder zurückgefalzt wird und in dem zweiten Schritt dann beim Versiegeln und der Wärmeaufbringung quasi ein Fertigfalzen erfolgt, beispielsweise durch zusätzliche Druckausübung, so dass der Falz formtechnisch verfestigt und das Versiegeln durchgeführt wird.

Denkbar können die Ränder in dem Bereich quer über eine Falzlinie miteinander versiegelt werden. Dies kombiniert die Verbindung des Falzens mit dem Siegeln, also Kraftschluss und Formschluss, und zwar beides im Bereich der Falzlinie. Es führt zu einer besonders effektiven und dichten Verbindung, die zudem gut auszubilden ist. Obwohl damit beide Verbindungsarten an einem Ort konzentriert sind, ist die sich daraus ergebende Falzlinie trotzdem ästhetisch ansprechbar und ausreichend dicht.

Günstigerweise können die Ränder in dem zu der Höhlung proximalen Bereich des Randes miteinander versiegelt werden. Diese Verbindung sorgt für eine gute Versiegelung möglichst nahe an der Wölbung der Teilschalen, so dass die beiden Formhälften möglichst dicht an dem Lebensmittelprodukt zusammengehalten werden.

Möglicherweise kann wenigstens ein Siegelstempel eines Siegelwerkzeugs von wenigstens einer Seite auf die Ränder gedrückt werden. Dabei dient das Siegelwerkzeug zum Aufbringen der Wärme als auch zum Ausüben eines Drucks auf gegebenenfalls vorgefalzte Ränder, so dass diese dort gesiegelt und weiter verformt werden. Dies lässt sich zum einen relativ rasch und effektiv ausführen, und führt zum anderen zu einem sehr kompakten kleinen fertig verbundenen umlaufenden Randbereich.

Gemäß einer weiteren Gestaltung können die Ränder von zwei Seiten zwischen Siegelstempeln zusammengedrückt und versiegelt werden. Damit können die verwendeten Temperaturen der Siegelstempel niedrig gehalten werden, weil sich der Wärmeeintrag von zwei Seiten schneller bis zu dem Siegelmaterial fortsetzt. Dies ist insbesondere bei Schokohohlfiguren günstig, bei denen die Schokolade der fertigen Figur durch das Verpacken möglichst nicht beeinflusst werden soll.

Als weitere Ausgestaltung der Erfindung können die Siegelstempel von beiden Seiten beweglich sein und auf die Ränder gedrückt werden. Dadurch lässt sich die Beaufschlagung der Ränder durch Druck gezielter steuern. Durch die Beweglichkeit der Siegelstempel auf beiden Seiten können sich die beiden Siegelstempel beim Andrücken in gewissem Maß gegenseitig hinsichtlich Druckkraft ausgleichen. Dies kommt der schonenden Behandlung der Ränder aus dünner Folie entgegen und es bildet sich ein insgesamt homogenerer, gleichmäßiger versiegelter Randbereich. Bei bestimmten Ausführungen hat sich gezeigt, dass dabei gegebenenfalls auch geringere Drücke verwendet werden können.

Gemäß einer besonderen Ausführungsform kann ein Kühlelement dem Siegelstempel in der Bewegungsrichtung auf den Rand vorauseilen. Dies gewährleistet, dass das Kühlelement vor dem Siegelstempel in Kontakt mit dem Rand gelangt, so dass der Rand und das zu verpackende Lebensmittelprodukt vor übermäßiger Siegelenergie, insbesondere in Form von Wärme, geschützt wird.

In besonderer Weise kann das Kühlelement mindestens so lange Kontakt mit dem Rand haben, bis die Siegelenergie an den Rand abgegeben worden ist. Dies gewährleistet eine ausreichende Kühlung des Lebensmittelprodukts, solange Energie eingetragen wird. Wahlweise kann der Kühlstempel auch noch so lange in Kontakt mit dem Rand bleiben, bis der Siegelvorgang vollständig abgeschlossen ist, also die gewünschte Verbindung durch die Siegelung hergestellt ist.

Gemäß einem möglichen Gedanken der Erfindung kann ein Kühlelement dem Siegelstempel aus einer Siegelposition, in Bewegungsrichtung weg von dem Rand, nachlaufen. Demzufolge eilt die Bewegung des Siegelstempels aus der Siegelposition, also in Richtung weg von dem Rand, der Lösebewegung des Kühlelementes voraus. Dies gewährleistet eine zuverlässige Kühlung des Produkts gegenüber dem am Rand anliegenden Siegelstempel und eine frühzeitige Wegbewegung des Siegelstempels, bei wenigstens noch teilweise aufrechterhaltender Kühlung.

Als Variante der Erfindung kann mit Berührungswärme und/oder Ultraschall gesiegelt werden. Damit lassen sich die gängigen Siegelmaterialien wie beispielsweise Polypropylen oder Polyethylen, oder dünne Kunststoffschichten im Allgemeinen, gut siegeln. In der Regel reicht eine Wärmeübertragung durch Berührung auf den Rand und das Siegelmaterial. Mithilfe von Ultraschall kann das Verfahren sehr zielgerichtet und punktgenau durchgeführt werden und es entsteht ausreichend Wärme, so dass die Siegelung zum guten Verschließen der beiden Formhälften an den Rändern vollständig ausgebildet wird.

Möglicherweise kann der Siegelstempel nur auf einen Teil des zu falzenden Randes drücken und/oder seine Siegelwirkung ausüben, und vorzugsweise nur ein radial äußerer Bereich des zu falzenden Randes gesiegelt werden. Obwohl dabei auch mit dem Siegelstempel gefalzt wird, reicht es für eine gute Siegelung, dass nur ein Teil des zu falzenden Randes von dem Siegelstempel niedergedrückt wird. Trotzdem bildet sich in diesem Bereich eine gute Siegelung aus, und der Rand wird ausreichend gefalzt.

Denkbar wirkt der Kühlstempel zum einen als Kühlelement, um den Wärmeeintrag in das Lebensmittelprodukt zu senken. Zum anderen wird mit dem Kühlstempel auch gefalzt, sodass er auch verformen Wirkung bezüglich des Randes hat. Damit lässt sich ein gutes Umfalzen bzw. Bördeln des Randes erreichen, insbesondere, wenn der Kühlstempel sehr nahe und gegebenenfalls fast angrenzend an das Lebensmittelprodukt vorgesehen ist.

Denkbar kann der Kühlstempel zwischen dem Siegelstempel und dem Lebensmittelprodukt angeordnet sein. Dies gewährleistet einen guten Schutz des Lebensmittelprodukts vor übermäßigem Wärmeeintrag.

Die erfindungsgemäße Aufgabe wird ferner gelöst durch eine Verpackung, welche insbesondere nach einem der vorgenannten Verfahrensansprüche hergestellt ist, wobei die Verpackung die Merkmale des unabhängigen Vorrichtungsanspruchs aufweist.

Dies kombiniert die Verbindungen des Falzens mit dem Siegeln, also Kraftschluss und Formschluss, und zwar beides im Bereich der Falzlinie. Es führt zu einer besonders effektiven und dichten Verbindung, die zudem gut auszubilden ist. Obwohl damit beide Verbindungsarten an einem Ort konzentriert sind, ist die sich daraus ergebende Falzlinie trotzdem ästhetisch ansprechbar und ausreichend dicht.

Denkbar kann sich der gesiegelte Bereich in den distalen Bereich und/oder in den proximalen Bereich erstrecken. Dies ermöglicht einen Siegelbereich, ausgehend von der Falzlinie, welcher sich in den distalen und/oder in den proximalen Bereich erstreckt und somit eine Kombination des gefalzten Bereichs mit dem Bereich kombiniert, in welchem die beiden Folien der Teilschalen noch etwa planparallel aneinanderliegen. Die Kombination dieser Dichtungen ist gut herzustellen und sorgt für eine besonders gute Abdichtung.

Bestimmte Ausführungsformen der Erfindung werden nachfolgend anhand der Zeichnung erläutert. Es zeigen:
- Figur 1: eine schematische Ansicht eines erfindungsgemäßen Verfahrensschrittes gemäß einer ersten Ausführungsform beim Anwenden in einer Vorrichtung, mit zwei Varianten,
- Figur 2: eine vergrößerte Schnittdarstellung einer Verpackung gemäß der Erfindung mit einer Siegelung gemäß einer ersten Variante,
- Figur 3: eine vergrößerte Schnittdarstellung einer Verpackung gemäß der Erfindung mit einer Siegelung gemäß einer zweiten Variante,
- Figur 4: eine vergrößerte Schnittdarstellung einer Verpackung gemäß der Erfindung mit einer Siegelung gemäß einer dritten Variante,
- Figur 5: eine vergrößerte Schnittdarstellung einer Verpackung gemäß der Erfindung mit einer Siegelung gemäß einer vierten Variante,
- Figur 6: eine Draufsicht auf eine erfindungsgemäße Verpackung, und
- Figur 7: eine schematische Ansicht eines erfindungsgemäßen Verfahrensschritte gemäß einer zweiten Ausführungsform beim Anwenden in einer Vorrichtung, mit zwei Varianten.

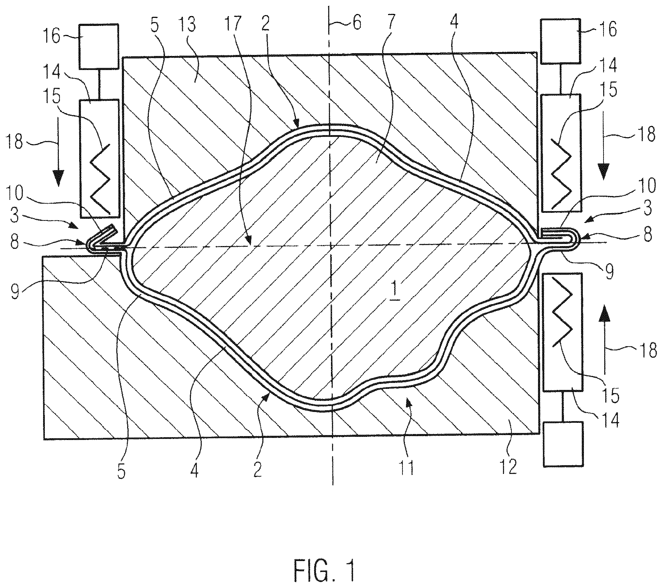

Figur 1 zeigt ein Lebensmittelprodukt 1, wie beispielsweise eine Schokohohlfigur. Schokohohlfiguren sind in verschiedenen Formen bekannt, beispielsweise als Ei, Nikolaus oder Osterhase. Solche Süßwarenhohlfiguren haben aufgrund ihrer inneren Höhlung eine relativ dünne Schale und damit eine fragilere Stabilität. Zum anderen haben sie besondere Formgestaltungen, um bestimmten Figuren zu entsprechen. Solche Formen können etwas kompliziertere Gestaltungen haben, die schwierig zu verpacken sind. Generell können mit der vorliegenden Erfindung aber auch Lebensmittelprodukte wie Süßwarenriegel, zum Beispiel Schokoriegel oder Müsliriegel, Käse oder andere Lebensmittel verpackt werden, welche innen keine separate Höhlung aufweisen, sondern aus Vollmaterial bestehen.

Das Produkt 1 ist zwischen zwei Teilschalen 2 vorgesehen, die sich in ihrer Kontur an die Außenform des Produkts 1 anschmiegen und jeweils aus einer vorgeformten, gewölbten dünnen Folie mit einem umfangsseitig abstehenden Rand bestehen. Als Folie wird vorzugsweise Metallfolie, insbesondere Aluminiumfolie, mit einer Dicke von 5 bis 100 µm, insbesondere 10 bis 50 µm, und besonders günstig 15 bis 40 µm, verwendet.

Die Folien 4 sind an ihrer dem Produkt 1 zugewendeten Seite vollflächig mit einer Siegelschicht 5 versehen, beispielsweise aus Polypropylen oder Polyethylen. Die Siegelschicht 5 ist in Realität wesentlich dünner ausgebildet als die Dicke der Folie und ist in der Zeichnung aus Darstellungsgründen nahezu ähnlich dick dargestellt. Sie kann auch im Sinn einer Verklebung ausgebildet sein.

An den Rändern 3 liegen die beiden Teilschalen 2 mit ihren einander zugewendeten Siegelschichten 5 aneinander an.

In Figur 1 sind rein aus Darstellungszwecken eine linke und eine rechte Hälfte gezeigt, welche durch eine senkrechte Mittellinie voneinander getrennt sind, um verschiedene Varianten der Erfindung darzustellen.

Beide Varianten gleichen sich insofern als sie das Produkt 1 zeigen, welches in einer aus den vorgeformten Teilschalen 2 gebildeten Höhlung 7 eingebracht und eingehaust ist, indem die aneinander anliegenden Ränder miteinander verbunden werden.

In der linken Hälfte der Figur 1 sind die Ränder der beiden Teilschalen bereits miteinander ansatzweise gefalzt, wobei sich eine Falzlinie 8 ausbildet, welche den Rand in der gezeigten Querschnittsdarstellung in einen der Höhlung 7 proximalen Bereich 9 und einen der Höhlung ferner gelegenen distalen Bereich 10 unterteilt. Die Falzlinie mit diesen vorgefalzten Bereichen erstreckt sich umfangsmäßig um die gesamte Verpackung 11 bzw. das Lebensmittelprodukt 1, könnte in bestimmten Ausführungsformen aber auch über den Umfang unterbrochen sein.

Die Aluminiumfolie wurde durch Umformen, insbesondere Tiefziehen oder Verfalten, zu den Teilschalen 2 vorgeformt und mit der Siegelschicht 5 versehen. Eine der Teilschalen 2 wurde in eine untere Werkzeugschale 12 gelegt, welche eine Ausformung entsprechend der Teilschale 2 aufweist. Darin wurde das Produkt 1 eingelegt und anschließend die andere Teilschale 2 von oben auf das Produkt 1 gelegt und eine obere Werkzeugschale 13 zum Halten der Teilschalen 2 und des dazwischen eingehausten Produkts 1 angeordnet.

Das Vorfalzen der Ränder 3, wie in der linken Ansicht gezeigt, erfolgte in einem hier nicht dargestellten vorangegangenen Produktionsschritt. Die Ränder 3 sind dabei nur so vorgefalzt, dass der proximale und der distale Bereich 9, 10 noch voneinander beabstandet sind, aber sich in einem relativ kleinen, vorzugsweise spitzen Winkel zueinander erstrecken.

In der linken Hälfte der Figur 1 liegt der proximale Bereich an der unteren Werkzeugschale 12 an und wird von ihr eben unterstützt. Auf der gegenüberliegenden, oberen Seite ist ein Siegelstempel 14 vorgesehen, welcher erwärmt ist. Zur Erwärmung ist hier beispielhaft ein als Heizeinrichtung 15 eine Art Glühwendel angedeutet. Der Siegelstempel 14 ist mit einem blockartig angedeuteten Bewegungsmechanismus 16 versehen, mit welchem er etwa vertikal, also senkrecht zu einer sich etwa radial von dem Produkt 1 erstreckenden Koppelebene 17 bewegt werden kann. Ein Pfeil 18 deutet die Richtung des Zufahrens des Siegelstempels 14 auf die vorgefalzten Ränder 3 an. Beim Herunterfahren des Siegelstempels 14 wird dann der distale Bereich 10 der Ränder parallel zu dem proximalen Bereich 9 der Ränder niedergedrückt und unter Aufbringung eines Drucks wird Wärme eingetragen, welche die Siegelschicht 5 erwärmt und das miteinander stoffschlüssige Versiegeln der Teilschalen 2 bewirkt. Bei dieser Anordnung drückt der Siegelstempel 14 gegen eine feste Auflage für die Ränder 3. Nach einer bestimmten Haltezeit kann der Siegelstempel 14 dann in einer dem Pfeil 18 entgegengesetzten Richtung wieder zurückgefahren werden.

In der rechten Hälfte der Figur 1 sind bei dieser Variante zwei Siegelstempel 14 vorgesehen, je einer auf jeder Seite der Ränder 3. Sie können wie mit den Pfeilen 18 angedeutet, mit Hilfe von separaten Bewegungsmechanismen 16 auf die Ränder 3 zubewegt werden, so dass sie dazwischen festgeklemmt und von Heizeinrichtungen 15 der Siegelstempel Wärme in die Ränder 3 eingetragen wird. Als Folge verbinden sich die gegenüberliegenden Siegelschichten stoffschlüssig. Dabei wird durch den Druck der Siegelstempel auch der gefalzte Bereich stärker zusammengedrückt, so dass eine Verformung stattfindet.

In der rechten Hälfte der Figur 1 erfolgte ein Vorfalzen der Ränder 3 derart, dass der distale und der proximale Bereich 9, 10 der Ränder 3 direkt aneinander anliegen und etwa parallel zueinander sind. Damit ist die Falzlinie 8 vollständiger gekrümmt. Beim Siegelvorgang mit Hilfe der Siegelstempel 14 erfolgt dann ein weiteres Zusammendrücken und das Siegeln, wie zuvor erläutert.

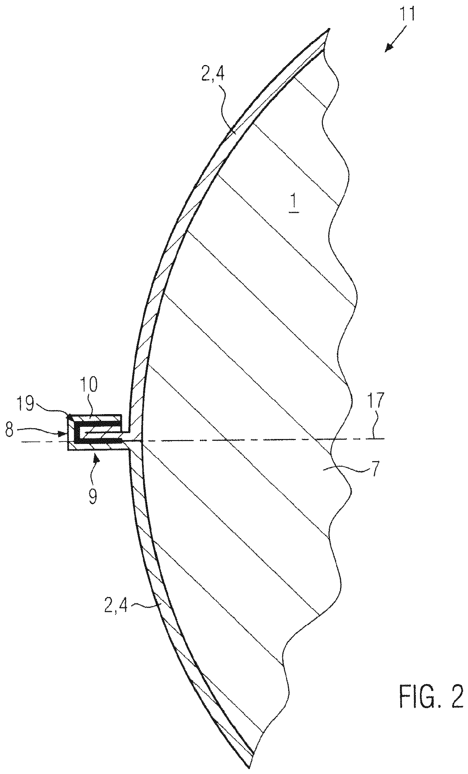

Figur 2 zeigt schematisch eine vergrößerte Querschnittsansicht auf einen fertig gesiegelten Rand, welcher beispielsweise entsprechend der in der rechten Hälfte der Figur 1 dargestellten Art und Weise hergestellt worden ist. Aus Übersichtlichkeitsgründen ist nur der Teil der Siegelschicht 5 dargestellt, in welchem die Versiegelung erfolgt ist. Dort ist die Versiegelung 19 durch einen etwas verdickt dargestellten Bereich erkennbar. Dieser befindet sich zwischen den Rändern 3 im proximalen Bereich 9, im distalen Bereich 10 sowie im Bereich der Falzlinie 8. Die Falzlinie ist hier ideell mit einer stumpfen Außenkante dargestellt. In der Realität sind die Teilschalen 2 so dünn, dass sich hier eine praktisch spitze äußere Ecke bildet, die nach außen als umlaufende Falzlinie erscheint.

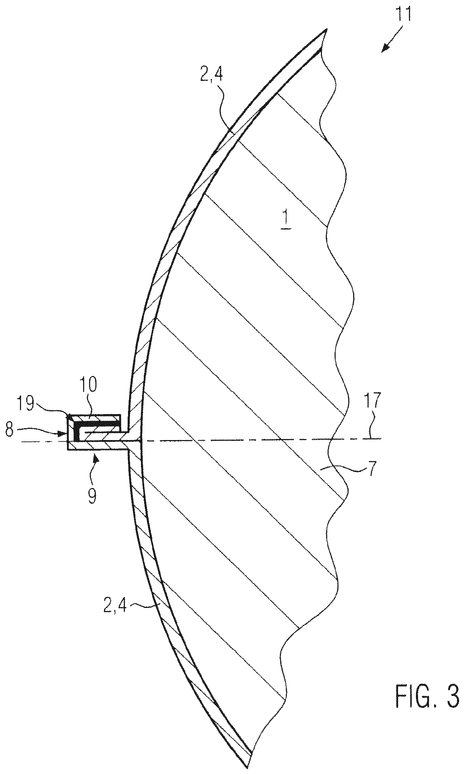

In Figur 3 ist abweichend von der Variante der Figur 2 eine mögliche Verpackung dargestellt, bei welcher der Wärmeeintragung für das Siegeln vor allen Dingen von einer Seite, hier auf den eingefalzten distalen Bereich erfolgt, so dass die Versiegelung in diesem distalen Bereich 10 und der Falzlinie 8 erfolgt, wobei der proximale Bereich weniger oder gar nicht versiegelt sein kann. Dies ist beispielsweise mit einer Vorrichtung und Verfahrensweise wie in der linken Hälfte der Figur 1 dargestellt, erreichbar.

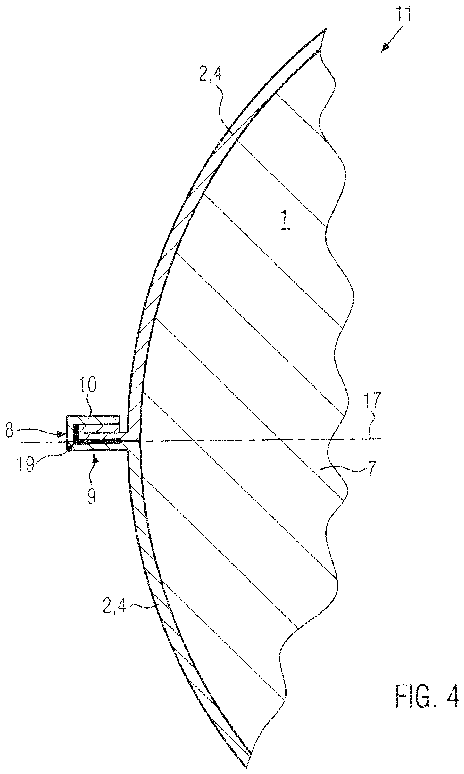

In Figur 4 ist als weitere Abwandlung der Figuren 2 und 3 eine Verpackung gezeigt, bei welcher ebenfalls ein einseitiger Wärmeeintrag erfolgte, so dass eine Versiegelung 19 in dem proximalen Bereich 9 und der Falzlinie 8 erfolgt ist.

Wahlweise kann also die Versiegelung nur in dem proximalen oder dem distalen Bereich erfolgen, wobei jeweils die Falzlinie 8 mit versiegelt wird.

Die Versiegelung kann sich in bestimmten Fällen ausgehend von der Falzlinie nur etwa 2 mm über den distalen und/oder proximalen Bereich 9, 10 erstrecken, so dass noch ausreichend Abstand zu der Höhlung mit der Schokohohlfigur gewährleistet ist. Hier kann beispielsweise ein Abstand von ebenfalls etwa 2 mm eingehalten werden.

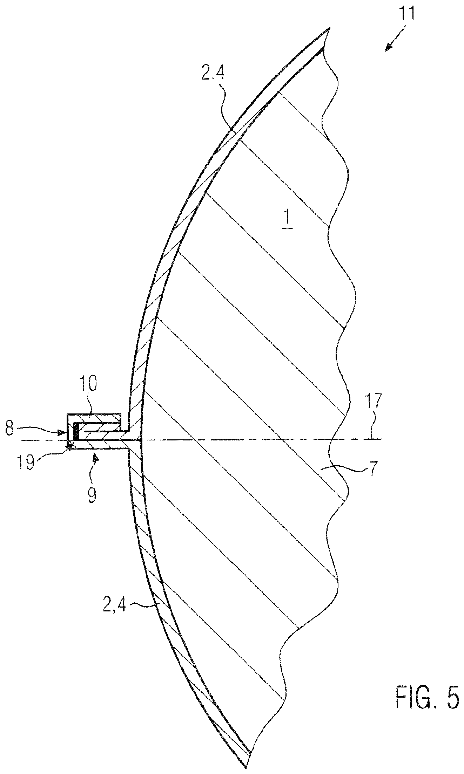

Figur 5 zeigt als zusätzliche Abwandlung der Figuren 2 bis 4 eine Ausführung, bei welcher die Versiegelung 19 nur im Bereich der Falzlinie 8 erfolgt. Im Übrigen entsprechen die Darstellungen der Figur 5 den Darstellungen gleicher Teile wie in den Figuren 2 bis 4 gezeigt und diesbezüglich beschrieben.

Eine Versiegelung, welche praktisch nur im Bereich der Falzlinie erfolgt, kann durch gezieltes Aufbringen der Wärme erreicht werden, zum Beispiel wenn ein Siegelstempel 16 mit Heizeinrichtung 15 so ausgebildet ist, dass die ausreichende Wärme zum Versiegeln praktisch nur in der Falzlinie 8 eingetragen wird, ohne dass ein volles Versiegeln des distalen oder des proximalen Bereichs erfolgt.

In einer hier nicht dargestellten Art und Weise können die Ränder nachfolgend durch einen weiteren möglichen Verfahrensschritt auch an die äußere Kontur der Teilschalen 2 angelegt werden.

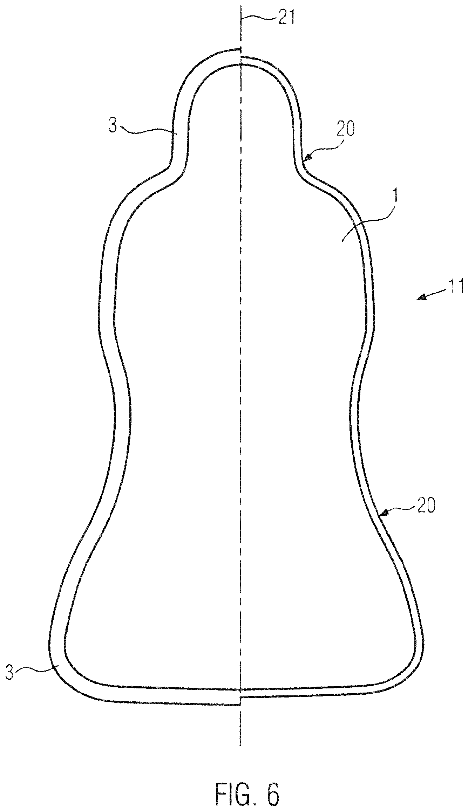

Figur 6 zeigt eine Draufsicht auf eine Verpackung 11 eines Produkts 1, welche im linksseitigen Bereich einen verfalzten Rand entsprechend einer der Figuren 2 bis 5 zeigt, welcher etwa radial von den Teilschalen 2 absteht, während in dem rechtsseitigen Bereich dieser Rand eng an die äußere dreidimensionale Form der Teilschalen 2 angelegt ist, so dass sich ein deutlich weniger von der Teilschale 2 abstehender angelegter Rand 20 ergibt. Die Mittellinie 21 in Figur 6 liegt in der gleichen Ebene wie die Mittellinie 6 in Figur 1. In diesem Sinn stellt Figur 1 etwa einen Horizontalschnitt durch die Verpackung 11 mit dem Produkt 1 der Figur 6 dar, auch wenn die Maße sich nicht 1:1 entsprechen.

Bei diesen Ausführungsformen der Erfindung kann also der Vorgang des Siegelns zusammen mit dem Falzen durchgeführt werden, oder das Siegeln auch erst nach dem Falzen erfolgen. Gegebenenfalls können die Ränder in einem ersten Schritt vorgefalzt werden, wie in Figur 1 dargestellt, und dann durch Anwenden der Siegelstempel in einem zweiten Schritt fertig gefalzt und versiegelt werden. Bei dem nachfolgenden Siegelvorgang kann der Falzanteil auch geringer sein, je nachdem wie stark im ersten Schritt schon vorgefalzt worden ist.

Es ist dabei besonders günstig für die Verbindung der Ränder, wenn im Bereich der Falzlinie praktisch quer über die Falzlinie mitversiegelt wird. Dabei können sich wahlweise die Siegelbereiche in den distalen und/oder in den proximalen Bereich hinein erstrecken, je nachdem wie stark der Wärmeeintrag von welcher Seite erfolgt ist.

Wenn von zwei Seiten gegen die Ränder gedrückt wird, kann dies eine sanftere Beanspruchung der Ränder bzw. ihrer Verbindung zum Rest der Teilschalen 2 bewirken.

Wenn der Wärmeeintragung von zwei Seiten erfolgt, wie beispielsweise in Figur 1 in der rechten Hälfte dargestellt, können die angewendeten Temperaturen niedriger sein als beispielsweise bei der linken Figur in Figur 1, wenn der gesamte Wärmeeintrag von einer Seite mit einem Siegelstempel erfolgt. Niedrige Temperaturen sind günstiger, um eine Beeinflussung des Produkts 1 zu vermeiden, insbesondere ein Aufschmelzen von Schokolade. Beispielsweise können bei der Verwendung eines Siegelstempels Temperaturen etwa im Bereich von 130° bis 160°, insbesondere 140° bis 150°, erfolgen, während bei zwei Stempeln auch im Bereich von 90° bis 110°, insbesondere etwa 100°, gearbeitet werden kann. In diesen Temperaturbereichen erfolgt noch ein gutes Aufschmelzen bzw. Versiegeln mit Hilfe des Siegelmaterials.

Damit lassen sich Verpackungen erreichen, die ausreichend dicht sind und einfach herzustellen sind. Auch wenn sie im Bereich der Falzlinie gesiegelt sind, können sie trotzdem ausreichend ästhetisch gestaltet werden.

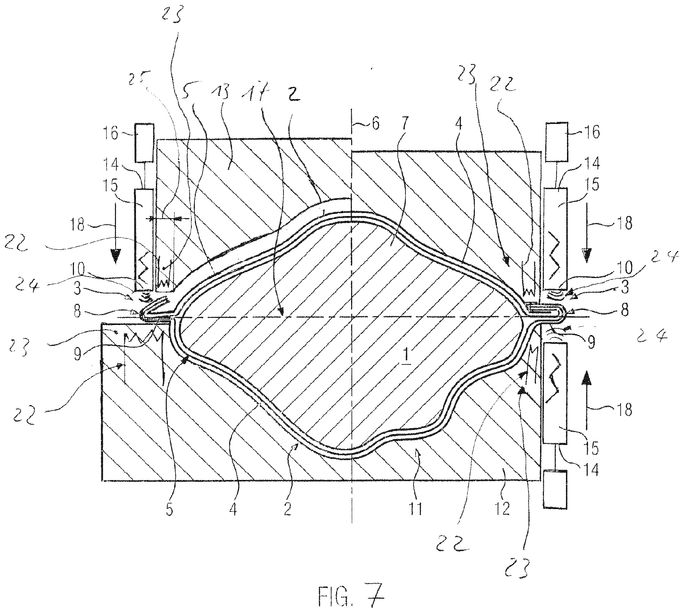

Figur 7 zeigt eine von der Ausführungsform der Figur 1 abgewandelte zweite Ausführungsform. Es wird auf die Beschreibung zu der ersten Ausführungsform gemäß Figur 1 verwiesen, soweit im Folgenden nichts Abweichendes erläutert ist. Gleiche Teile haben gleiche Bezugszeichen in den Figuren 1 und 7.

In dem Bereich oberhalb der Koppelebene 17 ist die obere Werkzeugschale 2 in zwei verschiedenen Positionen dargestellt. In dem Bereich links der Mittellinie 6 ist sie in einer von dem Lebensmittelprodukt 1 und der Teilschale 2 nach oben beanstandeten Position gezeigt. In dem Bereich rechts der Mittellinie 6 ist sie in einer Position in Anlage mit der Teilschale 2 dargestellt, wobei sie auch auf den zu falzenden Rand 3 drückt.

Die obere Werkzeugschale 13 ist in diesem Fall als Kühlelement ausgebildet. Die Kühlung kann über die gesamte Werkzeugschale stattfinden, ist aber insbesondere in den seitlichen Bereichen vorgesehen, mit welchen die obere Werkzeugschale auf den Rand 3 drückt. Dies ist symbolisch durch Kühlschlangen 22 in diesem Bereich angedeutet. Prinzipiell kann eine solche Kühlung aber auch auf andere Weise erfolgen.

In analoger Weise kann auch die untere Werkzeugschale 12 als Kühlelement ausgebildet sein. Dort sind entsprechende Kühlschlangen 22 in dem auf den Rand 3 treffenden Bereich dargestellt.

In dem Bereich links der Mittellinie 6 ist die obere Werkzeugschale 13 etwa im gleichen Abstand nach oben von dem Rand bzw. der Anteilschale 2 abgehoben wie der Siegelstempel 14. In dem Bereich rechts der Mittellinie 6 ist die als Kühlelement ausgebildete obere Werkzeugschale 13 auf das Lebensmittelprodukt bzw. die Teilschale heruntergefahren, sodass es in Kontakt mit der Teilschale 2 beziehungsweise dem Rand ist und mit einem Abschnitt gegen den Rand drückt. Jener Abschnitt ist als Kühlstempel 23 ausgebildet. In der Darstellung rechts der Mittellinie 6 befindet sich der Siegelstempel noch in der von dem Rand beanstandeten Ausgangsposition, ähnlich wie in der linken Bildhälfte, während die obere Werkzeugschale bereits mit dem Kühlstempel 23 auf den Rand drückend heruntergefahren ist. Die obere Werkzeugschale bzw. der Kühlstempel eilen dem Siegelstempel 14 also beim Schließen des Werkzeugs voraus. Der Siegelstempel 14 kommt erst nach dem Kühlstempel 23 im Kontakt mit dem Rand.

In der linken Bildhälfte ist der Rand 3 bereits leicht nach innen umgebogen gezeigt, steht aber noch in einem Winkel von dem in der Koppelebene 17 befindlichen Teil des Randes ab.

Beim Herunterfahren der oberen Werkzeugschale 13, wie in der rechten Bildhälfte dargestellt, wird der Rand 3 von dem Kühlstempel 23 nach unten gedrückt, sodass er neben der Verformung auch gleichzeitig gekühlt wird. Anschließend wird der Siegelstempel 14 nach unten gefahren und bleibt in Kontakt mit dem Rand bis genügend Siegelwärme in den Rand und die Siegelschicht 5 eingetragen ist. Die gleiche Bewegung führt analog die in der rechten Bildhälfte von unten dagegen drückende Heizeinrichtung 15 aus, sodass sie etwa gleichzeitig von oben und unten gegen den Rand drücken und diesen in der gewünschten Form halten.

Zusätzlich oder alternativ zu der reinen Berührungswärme, welche durch die als Heizschlange dargestellte Heizeinrichtung 15 dargestellt ist, kann der Wärmeeintrag auch über Ultraschall 24 erfolgen, in dem beispielsweise Ultraschallsender in den Heizeinrichtungen 15 vorgesehen sind. Der von einem Ultraschallsender auszusendende Ultraschall 24 ist je durch drei Schallwellenlinien in Figur 7 dargestellt. Damit lässt sich die Siegelschicht auch ausreichend erwärmen, so dass eine ausreichend gute Versiegelung im Bereich des Randes erfolgt.

Je nach Wahl des Verfahrens kann dann der Kühlstempel 23 in Kontakt mit dem Rand bleiben, wobei sich die Heizeinrichtungen 15 zuerst wieder von dem Rand beanstanden. Dadurch wird gewährleistet, dass das Lebensmittelprodukt stets ausreichend geschützt ist.

Bei diesem Verfahren dienen der Kühlstempel 23 Zug zum Kühlen und zum Falzen und der Siegelstempel 14 zum Energieeintrag und zum Falzen.

In der linken Bildhälfte ist für den auf den Rand treffenden Abschnitt des Kühlstempels 23 eine Breite 25 durch Bemaßungslinien angedeutet. Für einen üblich abstehenden Rand eines Schokoriegelprodukts, welches in eine Metallfolie, vorzugsweise Aluminium, einzupacken ist, beträgt diese Breite B etwa 1-3 mm, vorzugsweise 1,5-2,5 mm und insbesondere ca. 2 mm.

Bezüglich des Randes 3 bzw. der Koppelebene 17 ist der Kühlstempel 23 vom Inneren des Lebensmittelprodukts nach außen gesehen zwischen dem Lebensmittelprodukt und dem Siegelstempel vorgesehen.

Wahlweise kann der Kühlstempel 23 auch separat zu der Werkzeugschale 12,13 vorgesehen sein und gegebenenfalls auch unabhängig davon auf und nieder bewegt war. Damit kann beispielsweise der Kühlstempel 23 im Bereich des mit seiner Breite 25 gegen den randdrückenden Bereich separat beweglich vorgesehen sein. Dies kann an der oberen als auch in der unteren Werkzeugschale realisiert sein. Damit kann man die Funktion der Werkzeugschalen vermehrt auf das Halten der Teilschalen an dem Lebensmittelprodukt ausrichten, während der Kühlstempel 23 bzw. das Kühlelement in seiner Bewegung und Ausbildung besser auf die reine Funktion des Kühlen bzw. des Falzen an den entsprechenden seitlichen Abschnitten zum ordentlichen Falzen und Siegeln des Randes ausgerichtet werden kann.

Ganz allgemein kann bei dieser Erfindung das Kühlelement als Art Kühlglocke ausgebildet sein, welche sich glockenartig über das Produkt erstreckt.

Ferner kann der Siegelstempel zum Betätigen zusammen mit einem Siegelhubwerk verbunden sein.

## Patentansprüche

1. Verfahren zum Herstellen einer Verpackung (11) für ein Lebensmittelprodukt (1), insbesondere für eine Schokohohlfigur, wobei zwei Teilschalen (2) vorgesehen werden, welche je eine vorgeformte, gewölbte dünne Folie (4) mit einem umfangsseitig abstehenden Rand (3) aufweisen, zwischen welche ein Lebensmittelprodukt (1) eingebracht wird, und die Teilschalen (2) das Produkt (1) durch Koppeln ihrer Ränder (3) in einer Höhlung (7) einhausen, wobei wenigstens bereichsweise zwischen den Rändern (3) der zwei Teilschalen (2), welche aneinander anliegen, eine Siegelschicht (5) vorgesehen ist, und die Ränder (3) durch Siegeln und miteinander Falzen miteinander verbunden werden, wobei die Ränder (3) der beiden Teilschalen (2) durch eine Falzlinie (8) in einen distalen Bereich (10) und einen zur Höhlung proximalen Bereich (9) unterteilt werden, **dadurch gekennzeichnet,**
**dass** das Siegeln zusammen mit dem Falzen der Ränder (3) erfolgt.

2. Verfahren nach Anspruch 1,
**dadurch gekennzeichnet,**
**dass** die Ränder (3) in einem ersten Schritt vorgefalzt werden und in einem zweiten Schritt fertig gefalzt und versiegelt werden.

3. Verfahren nach Anspruch 1 oder 2,
**dadurch gekennzeichnet,**
**dass** die Ränder (3) in dem Bereich quer über eine Falzlinie (8) miteinander versiegelt werden.

4. Verfahren nach einem der vorhergehenden Ansprüche,
**dadurch gekennzeichnet,**
**dass** die Ränder (3) in dem zu der Höhlung (7) proximalen Bereich (9) des Randes (3) miteinander versiegelt werden.

5. Verfahren nach wenigstens einem der vorhergehenden Ansprüche,
**dadurch gekennzeichnet,**
**dass** wenigstens ein Siegelstempel (14) eines Siegelwerkzeugs von wenigstens einer Seite auf die Ränder (3) gedrückt werden.

6. Verfahren nach Anspruch 5,
**dadurch gekennzeichnet,**
**dass** die Ränder (3) von zwei Seiten zwischen Siegelstempeln (14) zusammengedrückt und versiegelt werden.

7. Verfahren nach Anspruch 6,
**dadurch gekennzeichnet,**
**dass** die Siegelstempel (14) von beiden Seiten beweglich sind und auf die Ränder (3) gedrückt werden.

8. Verfahren nach einem der vorhergehenden Ansprüche,
**dadurch gekennzeichnet,**
**dass** ein Kühlelement (13, 23) dem Siegelstempel (16) in der Bewegungsrichtung auf den Rand (3) vorauseilt.

9. Verfahren nach Anspruch 8,
**dadurch gekennzeichnet,**
**dass** das Kühlelement (13, 23) mindestens so lange Kontakt mit dem Rand (8) hat, bis die Siegelenergie an den Rand (3) abgegeben worden ist.

10. Verfahren nach einem der vorhergehenden Ansprüche,
**dadurch gekennzeichnet,**
**dass** ein Kühlelement (13, 23) dem Siegelstempel (16) aus einer Siegelposition, in Bewegungsrichtung weg von dem Rand, nachläuft.

11. Verfahren nach einem der vorhergehenden Ansprüche,
**dadurch gekennzeichnet,**
**dass** mit Berührungswärme und/oder Ultraschall gesiegelt wird.

12. Verfahren nach einem der vorhergehenden Ansprüche,
**dadurch gekennzeichnet,**
**dass** der Siegelstempel (14) nur auf einen Teil des Randes (3) drückt und/oder seine Siegelwirkung ausübt, und insbesondere nur ein radial äußerer Bereich des zu falzenden Randes gesiegelt wird.

13. Verfahren nach einem der vorhergehenden Ansprüche,
**dadurch gekennzeichnet,**
**dass** mit Hilfe eines Kühlstempels (23) gefalzt wird.

14. Verfahren nach einem der vorhergehenden Ansprüche,
**dadurch gekennzeichnet,**
**dass** der Kühlstempel (23) zwischen dem Siegelstempel (14) und dem Lebensmittelprodukt (1) angeordnet ist.

15. Verpackung (11) für ein Lebensmittelprodukt (1), insbesondere eine Schokohohlfigur, wobei die Verpackung (11) hergestellt mit einem Verfahren nach einem der vorhergehenden Ansprüche ist, wobei die Verpackung (11) zwei Teilschalen (2) aufweist, aus je einer vorgeformten gewölbten dünnen Folie (4) mit einem umfangsseitigen Rand (3), wobei die Teilschalen (2) an den Rändern (3) längs einer Koppelebene (17) miteinander verbunden sind und eine das Produkt (1) einhausende Höhlung (7) bilden, und die Ränder (3) durch Siegeln und Falzen miteinander verbunden sind, wobei die gefalzten Ränder (3) einen zu der Höhlung (7) proximalen Bereich (9) und einen zu der Höhlung (7) distalen Bereich (10) aufweisen, zwischen denen eine Falzlinie (8) vorgesehen ist,
**dadurch gekennzeichnet,**
**dass** sich der gesiegelte Bereich (19) quer über die Falzlinie (8) erstreckt.

16. Verpackung nach Anspruch 15,
**dadurch gekennzeichnet,**
**dass** sich der gesiegelte Bereich (19) in den distalen Bereich (10) und/oder in den proximalen Bereich (9) erstreckt.

## Claims

1. A method for manufacturing packaging (11) for a food product (1), in particular for a chocolate hollow body, wherein two partial-shells (2) are provided, each of which includes a pre-shaped, curved thin foil (4) having an edge (3) that projects peripherally, a food product (1) is introduced between the partial-shells, and the edges (3) of the partial-shells (2) are coupled to one another such that the half-shells accommodate the food product (1) in a cavity (7), wherein a sealing layer (5) is provided in at least some sections between the edges (3) of the two partial-shells (2), which edges (3) are mutually adjoining each other, and the edges (3) are joined to one another by sealing and folding with each other, wherein the edges (3) of the two partial-shells are divided though a folding line into a distal part (10) and a proximal part (9) with respect to the cavity, **characterized in that**
the sealing is performed at the same time as the edges (3) are folded with each other.

2. The method according to claim 1,
**characterized in that**
the edges (3) are prefolded in a first step and finished folded and sealed in a second step.

3. The method according to claim 1 or 2,
**characterized in that**
the edges (3) are sealed to one another in a region transversely across a folding line (8).

4. The method according to any of the foregoing claims,
**characterized in that**
the edges (3) are sealed to one another in a region (9) of the edge (3) that is proximal to the cavity (7).

5. The method according to any of the foregoing claims,
**characterized in that**
at least one sealing punch (14) of a sealing tool is pressed onto the edges (3) from at least one side.

6. The method according to claim 5,
**characterized in that**
the sealing punches (14) are movable from both sides and are pressed onto the edges (3).

7. The method according to claim 6,
**characterized in that**
the sealing punches (14) are movable from both sides and are pressed onto the edges (3).

8. The method according to any of the foregoing claims,
**characterized in that**
a cooling element (13, 23) is ahead of the sealing punch (14) in the movement direction towards the edge (3).

9. The method according to claim 8,
**characterized in that**
the cooling element (13, 23) is in contact with the edge (3) at least until the sealing energy has been delivered to the edge (3).

10. The method according to any of the foregoing claims,
**characterized in that**
a cooling element (13, 23) follows the sealing punch (14) from a sealing position, in movement direction away from the edge.

11. The method according to any of the foregoing claims,
**characterized in that**
it is sealed with contact heat and/or ultrasound.

12. The method according to any of the foregoing claims,
**characterized in that**
the sealing punch (14) presses only on a part of the edge (3) and/or exerts its sealing effect, and in particular only a radially outer region of the edge to be folded is sealed.

13. The method according to any of the foregoing claims,
**characterized in that**
it is folded with the aid of a cooling stamp (23).

14. The method according to any of the foregoing claims,
**characterized in that**
the cooling stamp (23) is arranged between the sealing punch (14) and the food product (1).

15. Packaging (11) for a food product (1)), in particular for a chocolate hollow body, wherein the packaging (11) is manufactured with a method according to any of the foregoing claims, wherein the packaging (11) has two partial-shells (2), each of which includes a pre-shaped, curved thin foil (4) having a peripheral edge (3), wherein the partial-shells (2) are coupled to one another on the peripheral edges (3) along a coupling plane (17) and form a cavity (7) accommodating the food product (1), and the peripheral edges (3) are joined to one another using a sealing and folding process, wherein folded edges (3) have a region (9) proximal to the cavity (7) and a region (10) distal to the cavity (7), a folding line (8) being provided between said regions, **characterized in that**
the sealed region (19) extends transversely across the folding line (6).

16. Packaging according to claim 15,
**characterized in that**
the sealed region (19) extends into the distal region (10) and/or into the proximal region (9).

## Revendications

1. Procédé de fabrication d'un emballage (11) pour un produit alimentaire (1), en particulier pour une figurine creuse en chocolat, dans lequel sont prévues deux sous-coques (2), qui présentent chacune une feuille mince (4) préformée, incurvée, avec un bord (3) faisant saillie sur la périphérie, entre lesquelles un produit alimentaire (1) est introduit, et les sous-coques (2) enferment le produit (1) dans une cavité (7) par accouplement de leurs bords (3), une couche de scellement (5) étant prévue au moins par endroits entre les bords (3) des deux sous-coques (2) qui sont adjacents l'un à l'autre, et les bords (3) étant reliés l'un à l'autre par scellement et sertissage, les bords (3) des deux sous-coques (2) pouvant être divisés par une ligne de sertissage (8) en une région distale (10) et une région (9) proximale à la cavité, **caractérisé en ce que** le scellement est réalisé en même temps que le sertissage des bords (3).

2. Procédé selon la revendication 1, **caractérisé en ce que** les bords (3) sont pré-sertis dans une première étape et le sertissage et le scellement sont terminés dans une deuxième étape.

3. Procédé selon la revendication 1 ou 2, **caractérisé en ce que** les bords (3) sont scellés ensemble dans la région transversalement au-dessus d'une ligne de pliage (8).

4. Procédé selon l'une quelconque des revendications précédentes, **caractérisé en ce que** les bords (3) sont scellés ensemble dans la région (9) du bord (3) proximale à la cavité (7).

5. Procédé selon au moins une des revendications précédentes, **caractérisé en ce qu'**au moins un poinçon de scellement (14) d'un outil de scellement est pressé depuis au moins un côté sur les bords (3).

6. Procédé selon la revendication 5, **caractérisé en ce que** les bords (3) sont pressés ensemble et scellés sur deux côtés entre des poinçons de scellement (14).

7. Procédé selon la revendication 6, **caractérisé en ce que** les poinçons de scellement (14) sont mobiles des deux côtés et sont pressés sur les bords (3).

8. Procédé selon l'une des revendications précédentes, **caractérisé en ce qu'**un élément de refroidissement (13, 23) précède le poinçon de scellement (16) dans le sens du déplacement vers le bord (3).

9. Procédé selon la revendication 8, **caractérisé en ce que** l'élément de refroidissement (13, 23) est en contact avec le bord (8) au moins jusqu'à ce que l'énergie de scellement ait été transférée au bord (3).

10. Procédé selon l'une des revendications précédentes, **caractérisé en ce qu'**un élément de refroidissement (13, 23) suit le poinçon de scellement (16) à partir d'une position de scellement, dans le sens d'un mouvement d'éloignement du bord.

11. Procédé selon l'une des revendications précédentes, **caractérisé en ce que** le scellement est réalisé avec de la chaleur de contact et/ou des ultrasons.

12. Procédé selon l'une des revendications précédentes, **caractérisé en ce que** le poinçon de scellement (14) n'appuie et/ou n'exerce son effet de scellement que sur une partie du bord (3), et en particulier seule une région radialement extérieure du bord à sertir est scellée.

13. Procédé selon l'une des revendications précédentes, **caractérisé en ce que** le sertissage est effectué à l'aide d'un poinçon de refroidissement (23).

14. Procédé selon l'une des revendications précédentes, **caractérisé en ce que** le poinçon de refroidissement (23) est disposé entre le poinçon de scellement (14) et le produit alimentaire (1).

15. Emballage (11) pour un produit alimentaire (1), en particulier une figurine creuse en chocolat, l'emballage (11) étant fabriqué par un procédé selon l'une des revendications précédentes, l'emballage (11) comprenant deux sous-coques (2), chacune consistant en une feuille mince incurvée préformée (4) avec un bord périphérique (3), les sous-coques (2) étant reliées l'une à l'autre au niveau des bords (3) le long d'un plan d'accouplement (17) et formant une cavité (7) entourant le produit (1), et les bords (3) étant reliés entre eux par scellement et sertissage, les bords sertis (3) présentant une région (9) proximale à la cavité (7) et une région (10) distale à la cavité (7), entre lesquelles est prévue une ligne de sertissage (8), **caractérisé en ce que** la région scellée (19) s'étend transversalement au-delà de la ligne de sertissage (8).

16. Emballage selon la revendication 15, **caractérisé en ce que** la région scellée (19) s'étend dans la région distale (10) et/ou dans la région proximale (9).
